# EUROPEAN PATENT APPLICATION

(11) **EP 3 021 097 A1**
(43) Date of publication of application: **18.05.2016**
(21) Application number: 14193442.2
(22) Date of filing: 17.11.2014
(51) Int. Cl.: G01K 1/14

(54) **Measuring insert for measuring temperature**

(71) Applicant: ENDRESS + HAUSER WETZER GmbH + Co. KG, 87484 Nesselwang (DE)
(72) Inventor: Casirati, Paolo, 24047 Treviglio (IT); Ahmed, Shakil, 20096 Pioltello (IT)
(74) Representative: Andres, Angelika Maria

(57) **Abstract**

Measuring insert (ME), preferably for measuring temperature, comprising: an elongated body (C) which is insertable into a protective sheath (S), preferably a thermowell, and an end-plate (EP) which is adjustably connected to the elongated body (C), wherein the position of the end-plate (EP) along the length of the elongated body (C) is adjustable.

## Description

The present invention relates to a measuring insert. Such measuring inserts are conventionally used for temperature measurement and are e.g. for resistance thermometers standardized according to DIN 43735. Such inserts may be inserted in a protective sheath such as a thermowell. However, operation without a thermowell may be possible in special cases. A temperature sensor is located in the tip of the measuring insert. The measuring insert may exhibit loading springs to ensure a good contact to the thermowell floor.

Apart from the DIN versions, customer specific versions are available, for example for other measuring insert lengths, with or without a terminal block, with or without a transmitter.

A transmitter can be built upon the measuring insert. In this case, the transmitter replaces the terminal block and is directly attached to an end-plate of the measuring insert.

For maximum reliability and a long lifetime it is necessary to match the thermowell to the measuring insert and/or the transmitter. Only correct measuring insert length and correct measuring insert diameter ensure sufficient heat transfer from thermowell to the measuring insert. When fitting the measuring insert into a thermowell, it is very important to determine the correct insertion length (= thermowell length for bottom thicknesses of ≤ 5.5 mm). In order to ensure that the measuring insert is firmly pressed down onto the bottom of the thermowell, the insert must be spring-loaded (spring travel: max 10 mm).

However, the case may appear that spring travel length does not suffice to bring the insert in contact with the bottom of the thermowell. Also, it may be necessary to provide a tailor made measuring insert for a thermowell or protective sheath. Such a tailor made insert may take extra time or cause additional costs.

Hence, it is an object of the present invention to provide a measuring insert which overcomes the above mentioned disadvantages.

The problem is solved by a measuring insert, preferably for measuring temperature, and a measuring arrangement.

Regarding the measuring insert the problem is solved by a measuring insert, preferably for measuring temperature, which measuring insert comprises an elongated body which is insertable into a protective sheath, preferably a thermowell, and an end-plate which is adjustably connected to the elongated body, wherein the position of the end-plate along the length of the elongated body is adjustable.

The protective sheath can e.g. be a tube. The protective sheath can be made from solid material, for example a bar, e.g. by a milling process.

In an embodiment of the measuring insert the end-plate serves for adjusting the length of the elongated body to the inner length of the protective sheath.

In an embodiment of the measuring insert the end-plate has an opening in which the elongated body is inserted, and wherein the end-plate extends radially from said elongated body.

Alternatively the end-plate can comprise a first and a second washer which both a have a central hole which serves for receiving the elongated body. The washer may then serve to connect the insert to the housing. The second washer may couple to the elongated body in order to control the length the elongated body is insertable in the protective sheath. Hence the first washer may serve to fix the insert to a fitting, as is e.g. present in the housing, whereas the second washer may serve to fix the elongated body to the end plate. The second washer may couple to the elongated body via a thread which engages with a corresponding thread on the elongated body. Additional a nut may be provided with serves for coupling the second washer with the elongated body. The two washer may be arranged on top of each other.

In an embodiment of the measuring insert a sensor element is arranged in said elongated body, which sensor element is electrically connected via connection leads which run through the elongated body and protrude from a distal end of the elongated body.

In an embodiment of the measuring insert the end-plate comprises a terminal block and said connection leads are connected to said terminal block.

In an embodiment of the measuring insert said terminal block serves for connecting said connection leads to extension leads.

In an embodiment of the measuring insert said end-plate comprises a transmitter and said connection leads are connected to said transmitter.

In an embodiment of the measuring insert a tube with an outer thread is mounted on said elongated body. The tube can e.g. be put over the elongated body and thereafter be fixed to the elongated body.

In an embodiment of the measuring insert said end-plate is threaded on the elongated body.

In an embodiment of the measuring insert said opening has an internal thread which serves for receiving an external thread of the elongated body.

In an embodiment of the measuring insert a check-nut is screwed on said external thread of said elongated body.

In an embodiment of the measuring insert the end-plate is snapped on the elongated body.

In an embodiment of the measuring insert the end plate and said elongated body comprise means for snapping the end plate on the elongated body.

In an embodiment of the measuring insert said elongated body is a mineral isolated sheath. Also, the measuring insert may comprise one or more insulated cables that are arranged in a steel tube, wherein the insulation can be made of some sort insulating material with which the steel tube is filled and in which the cables are embedded.

In an embodiment of the measuring insert said end-plate comprises means for fastening said end-plate to said protective sheath.

In an embodiment of the measuring insert at least one spring-element having a spring-travel distance is provided which serves to connect the insert to the protective sheath.

Regarding the measuring arrangement the problem is solved by a measuring arrangement comprising a measuring insert according to one of the preceding claims and a protective sheath.

In an embodiment of the measuring arrangement the tip of the measuring insert is in touch with the closed end of the protective sheath.

The invention is described in further detail on the basis of the following figures:
Fig. 1 shows a diagram of a measuring arrangement comprising a housing and a protective sheath into which a measuring insert is inserted,
Fig. 2 shows a diagram of measuring insert with a moveable end-plate according to an embodiment of the invention,
Fig. 3 shows a diagram of a measuring insert with a moveable end-plate,
Fig. 4 shows a diagram of a part of the measuring insert comprising a transmitter attached to the end-plate of the measuring insert,
Fig. 5 shows a diagram of a threaded connection between an elongated body and an end-plate of a measuring insert,
Figure 6 shows another embodiment of a measuring insert with an end-plate moveable along the length of the insert, and
Figure 7 shows still another embodiment of a measuring insert with an end-plate moveable along the length of the insert,
Figure 8 shows an elongated body, which has a connection element attached to, which serves to moveably connect the elongated body with the end-plate, and
Figure 9 shows an end-plate, with a central hole in which the elongated body is insertable.

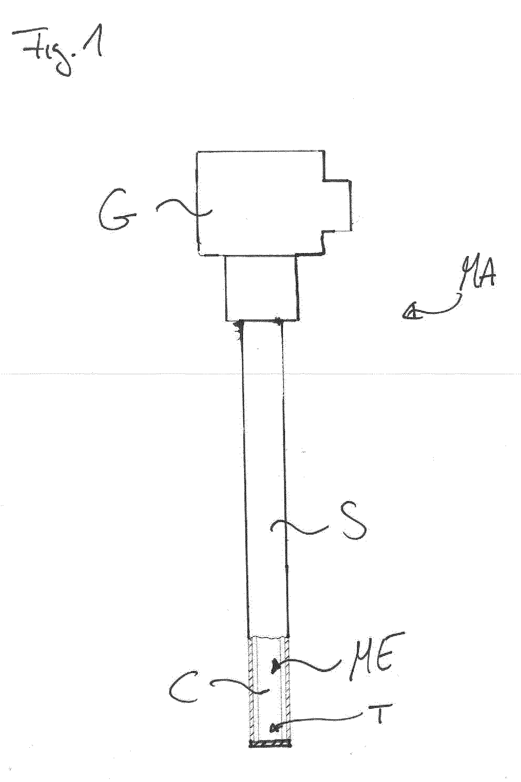

Figure 1 shows a measuring arrangement MA that comprises a housing G which is connected to a protective sheath S. Inside the housing G and the protective sheath S a measuring insert ME is arranged. The tip T of the insert ME is in direct contact with the bottom of the protective sheath S.

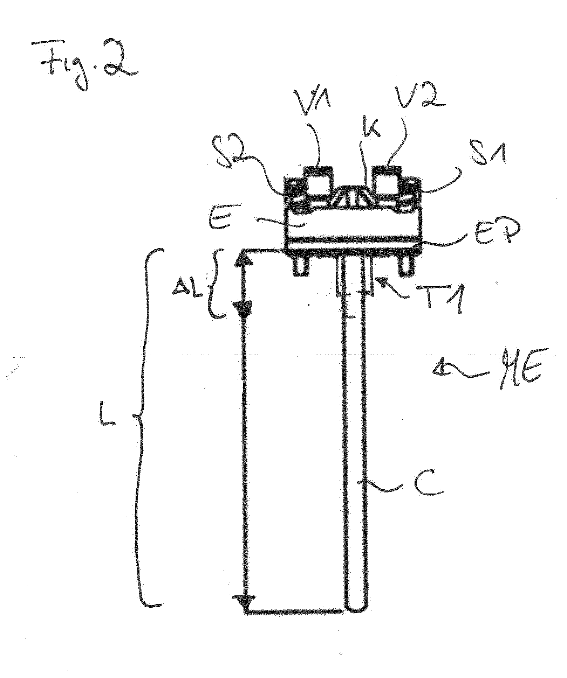

During operation the protective sheath S is in contact with a process medium which temperature is to be measured. Inside the protective sheath S an elongated body C of the measuring insert ME is arranged. Inside the elongated body C a temperature sensor -not shown- is arranged preferably at the tip T of the measuring insert ME. A sensor signal from that temperature sensor may be transmitted via connection wires K1, K2 which are also arranged inside the elongated body C of the measuring insert ME. These connection wires K1, K2 extend from the position of the temperature sensor through the elongated body C into a chamber of the housing G of the measuring arrangement MA. The elongated body C is connected to the housing G via an end-plate. This type measuring insert ME is well known in the state of the art end e.g. subject to German industrial standard DIN 43735. In Figure 2 a measuring insert ME according to an embodiment of the invention is shown. This insert ME may be inserted into a protective sheath S, e.g. the one of figure 1. For example the insert ME may be inserted in the protective sheath S through the housing G. For this purpose the housing G can be interconnected with the protective sheath S via an opening through which the elongated body C of the insert can be introduced into the protective sheath S. The end-plate EP of the measuring insert ME is then attached to the housing G in order to fasten the measuring insert ME.

The elongated body C has a certain length L up to which it may be inserted into a protective sheath S, such as a thermowell. This length L is basically defined by the position of the end-plate EP attached to the elongated body C. Thus end-plate EP serves to attach the measuring insert ME. This can be achieved by one or more holes in the end-plate EP in which screws S1, S2, preferably spring screws, can be inserted. The screws S1, S2 can then be screwed into a corresponding thread in the chassis of the housing G or a corresponding thread an attachment region, e.g. a flange, of the protective sheath S.

On the end-plate EP a transmitter electronics E which serves for processing a sensor signal and/or a connection terminal V1, V2 for connection wires of a sensor element can be arranged.

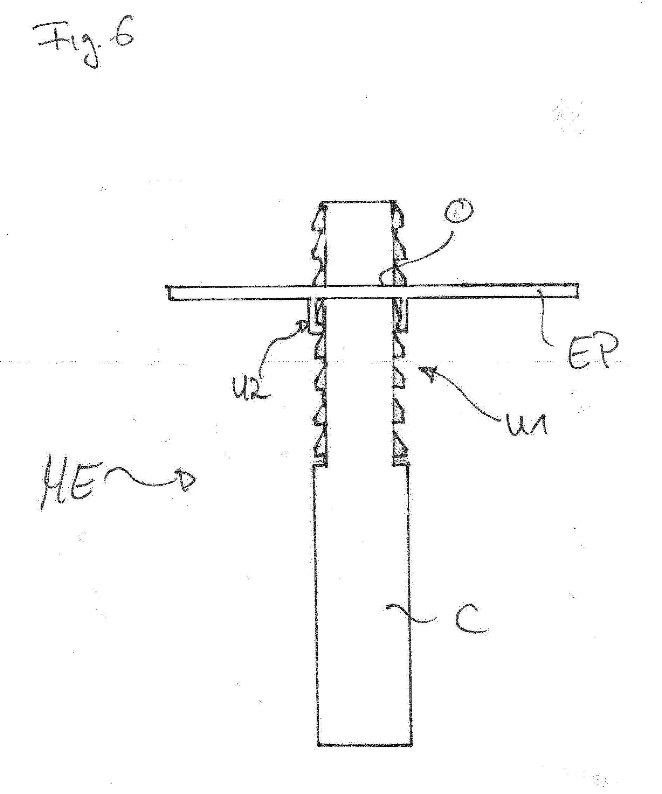

By way of a screw thread T1 which is e.g. fabricated on the elongated body C or attached to the elongated body C and a counter thread -not shown- on the end-plate EP the length L up to which the elongated body C can be inserted in the protective sheath S can be adjusted. There are also other possibilities which allow the end-plate EP to be movable along the longitudinal axis of the elongated body C, e.g a snap connection as shown in figure 6 can be used. By the length of the screw thread T1 or length of the corresponding counter thread -not shown- on the end-plate a distance ΔL is defined, by which the length L up to which the elongated body C can be inserted into the protective sheath S can be modified.

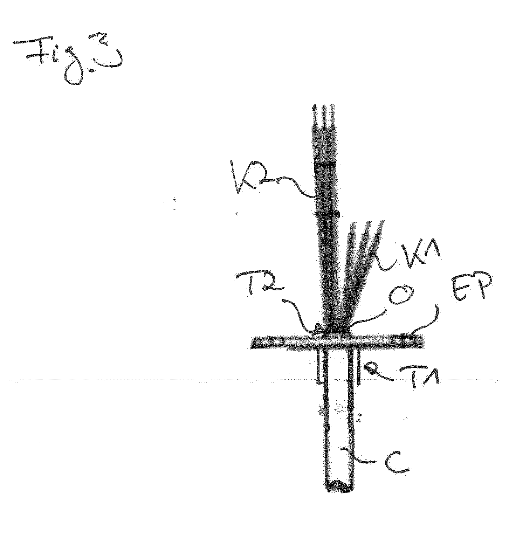

Figure 3 shows the proximal of an insert ME at which the end-plate EP is moveably attached to the elongated body C. The end-plate EP may have holes which serve for receiving screw or spring screws to fasten the end-plate EP to a housing G or protective sheath S. Connection wires K1, K2 for connecting a sensor and/or transmitting a sensor signal protrude from the proximal end of the elongated body C. Via these connection wires k1, K2 one or more sensor elements, e.g. one or more temperature sensor elements, arranged in the elongated body C can be electrically connected. The external thread T1 of the elongated body C is depicted schematically. The end-plate EP may have, as shown in figure 3, a central hole O which serves for receiving said external thread T1 of the elongated body. The hole O may have an inner thread. By turning the elongated body C or the end-plate EP the two threads interrelate and a desired position of the end-plate EP along the longitudinal axis of the elongated body C can be set.

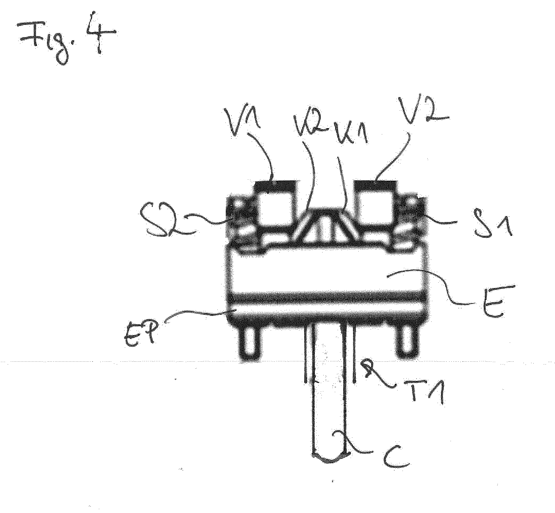

Figure 4 shows an end-plate EP with a transmitter electronics E installed upon the end-plate EP. The connection wires K1, K2 of the one or more sensor elements are connected to screw terminals V1, V2. A sensor signal can then be processes by the transmitter electronics E.

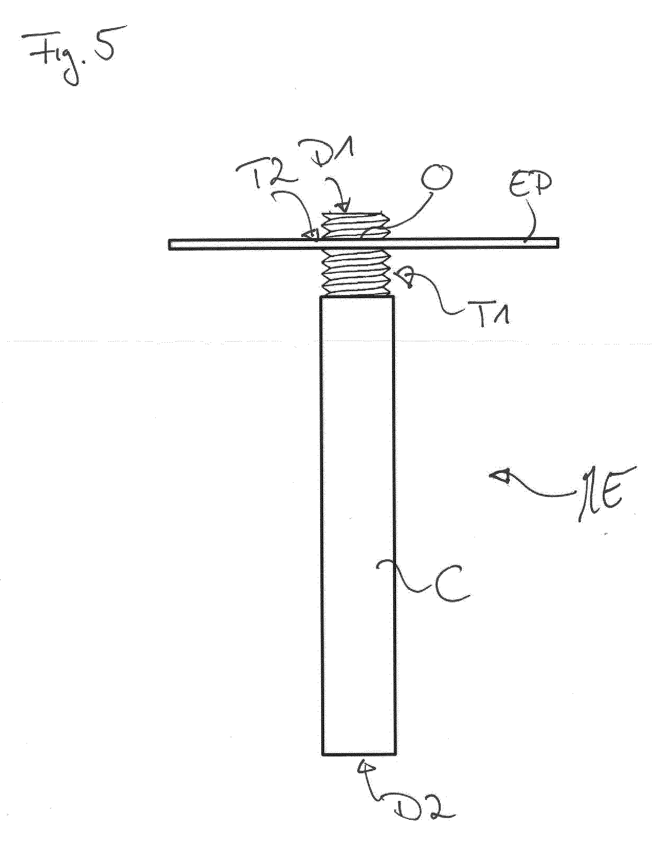

Figure 5 shows a detailed drawing of an external thread T1 on the elongated body C. By turning either the end-plate EP or the elongated body C the position of the end-plate EP can be set. In order to fix the position of the end-plate EP a check nut or a counter nut -not shown- can also be threaded onto the external thread T1 of the elongated body C.

Figure 6 shows a drawing of a measuring insert ME with a snap connection U1, U2 between the elongated body C which comprises the temperature sensor and the end-plate EP. The elongated body C has a plurality of snap latches U1 which interconnect with a pair of latching hooks U2 of the end plate EP. By sliding the end-plate EP down the elongated body C the inserted length L up to which the measuring insert ME can be inserted in a protective sheath S may be set.

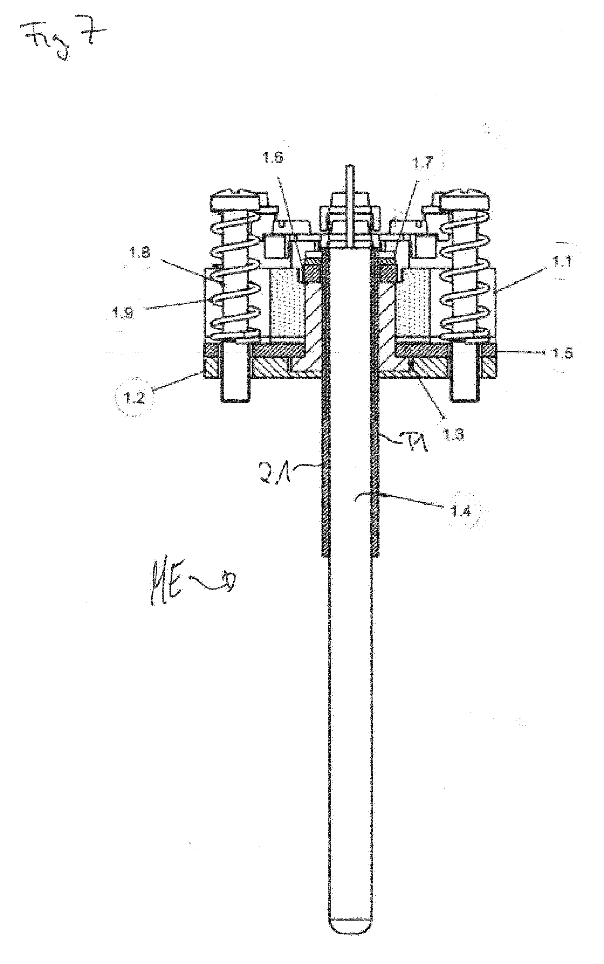

Figure 7 shows another embodiment of a measuring insert ME. It is an advantage of this embodiment that it can be mounted in a transmitter head, i.e. a housing, and to adjust and fix the length up to which the elongated body is inserted in the protective sheath afterwards. E.g. a wrench acting on a rotating nut 1.3 can be employed for that purpose.

A first washer 1.2 is connected to the housing with springs 1.9 and screws 1.8. A ceramic block with electrical connection may also be employed 1.1. Between the first washer 1.2 and a second washer 1.5 a rotating nut 1.3 is arranged. The nut 1.3 can revolve around the axis of the insert ME and the elongated body respectively. The axial movement of the nut 1.3 is confined by the second washer 1.5 and the washer 1.2. The nut may have a shoulder as shown in figure 7 which is arranged between the first and the second washer 1. 2, 1.5. This shoulder may fit into a recess of the first washer 1.2 and is confined in this recess by the second washer 1.5.

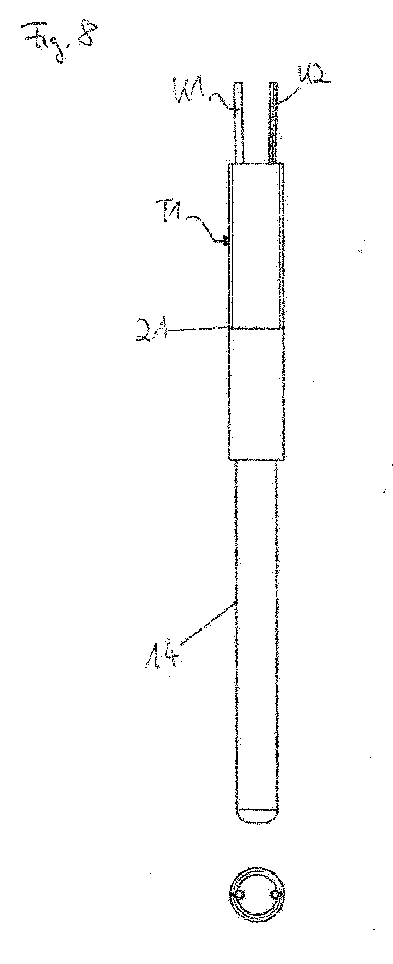

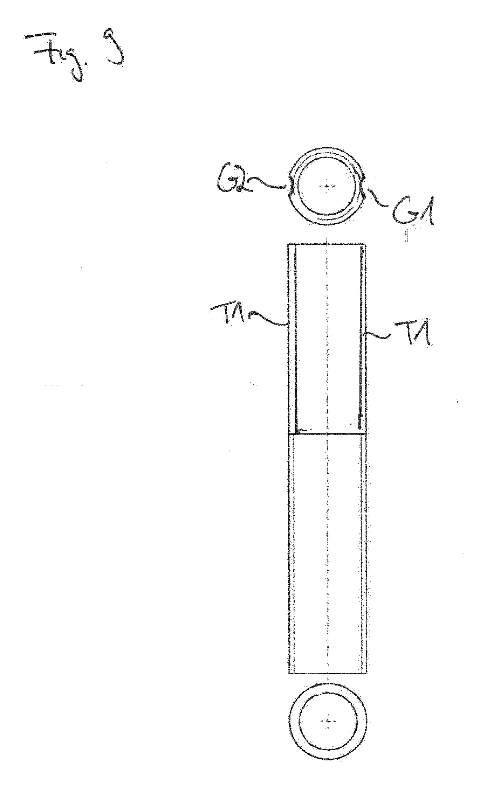

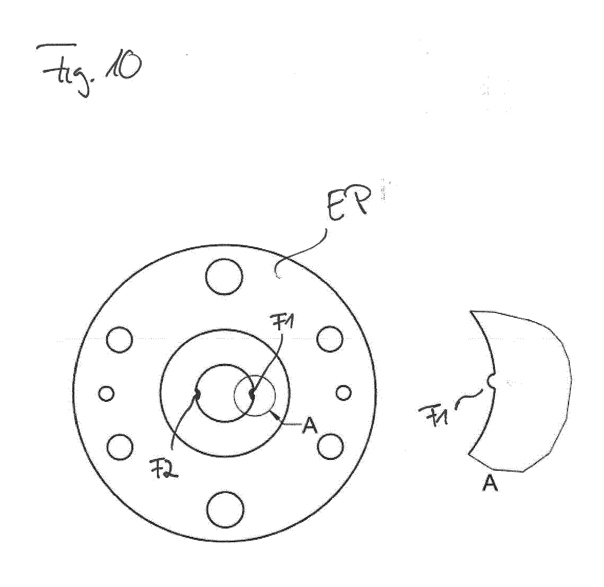

The elongated body 1.4 may comprise a RTD or Thermocouple as sensor element. As shown in figure 7 and figure 8 a tube 2.1 is connected at one end of the elongated body, i.e. the end of the elongated body at which its electrical connections K1, K2 are arranged. The tube 2.1 can be welded, crimped, or otherwise mechanically connected and has a threaded part (outer thread) T1. The tube 2.1 has at least one groove, preferably two grooves G1, G2, as shown in the cross-sectional view of figure 9, along at least a part of the threaded section T1 that is engaged on at least one spline F1, F2 arranged on the second washer 1.2 as shown in figure 10. This at least one spline F1, F2 allows the insert and or the elongated body 1.4 respectively to axially move when the nut 1.3 is revolved. The at least one spline F1, F2 prevents the elongated body and the insert respectively from revolving with the rotating nut 1.3. The rotating nut 1.3 may be revolved with the help of a suitable wrench.

As shown in figure 9 the two grooves G1, G2 may be present in the part of the insert which possesses the threaded section T1. Preferably the two grooves extend along the entire length of the threaded section T1.

The insert ME is attached to the housing G and, e.g. in case the elongated body does not touch the bottom of the thermowell, the nut 1.3 is rotated to adjust the length up to which the elongated body is inserted in the thermowell. When (the tip of) the elongated body reaches the bottom of the thermowell, the springs1.9 are loaded and push the insert ME and the elongated body respectively against the bottom of the thermowell, thereby assuring the contact. When the length up to which the insert and the elongated body respectively is adjusted it may be fixed using, e.g. another washer 1.6 and a nut 1.7. This washer 1.6 can be engaged on the threaded tube 2.1 part of the elongated body in order to tighten the mechanism and avoid loosening the insert ME on the terminal block E. After the insert ME is fixed the insert ME may be electrically connected to e.g. an electronic circuit in the housing.

Thus, the present invention does provide a mechanism to bring the measuring insert in contact with the protective tube it is inserted in, does not take up a lot of space, allows to mount the insert in the housing and the to adjust the length, is compatible with the design of present housings, and allows to employ standard components, such as the ceramic block 1.1.

Alternatively the washer may have a threaded hole: after connecting it to the head, the insert 3.1 is screwed in the washer until it reaches the bottom of the thermowell. When the length is adjusted, the screws in the terminal block will be connected to the threaded washer 3.2 that has a pattern of threaded holes suitable for the aforementioned screws of the insert 3.1.

## Claims

1. Measuring insert (ME), preferably for measuring temperature,
comprising: an elongated body (C) which is insertable into a protective sheath (S), preferably a thermowell, and
an end-plate (EP), e.g. a washer, which is adjustably connected to the elongated body (C),
wherein the position of the end-plate (EP) along the length of the elongated body (C) is adjustable.

2. Measuring insert (ME) according to claim 1,
wherein the end-plate (EP) serves for adjusting the length of the elongated body to the inner length of the protective sheath (S).

3. Measuring (ME) insert according to one of the preceding claims,
wherein the end-plate has an opening (O) in which the elongated body (C) is inserted, and wherein the end-plate (EP) extends radially from said elongated body (C).

4. Measuring insert (ME) according to one of the preceding claims,
wherein a sensor element is arranged in said elongated body (C),
which sensor element is electrically connected via connection leads (K1, K2), e.g. wires, which run through the elongated body (C) and protrude from a proximal end (D1) of the elongated body.

5. Measuring insert (ME) according to one of the preceding claims,
wherein the end-plate comprises a terminal block (E) and said connection leads (K1, K2) are connected to said terminal block (E).

6. Measuring insert (ME) according to one of the preceding claims,
wherein said end-plate (EP) comprises a transmitter (E) and said connection leads (K1, K2) are connected to said transmitter (E).

7. Measuring insert (ME) according to one of the preceding claims,
wherein a tube with an outer thread is mounted on said elongated body.

8. Measuring insert (ME) according to one of the preceding claims,
wherein said end-plate (EP) is threaded on the elongated body (C).

9. Measuring insert (ME) according to one of the preceding claims,
wherein said opening (01) has an inner thread (T2) which serves for receiving an external thread (T1) of the elongated body (C).

10. Measuring insert (ME) according to one of the preceding claims,
wherein the end-plate comprises a first and a second washer which both have a central, preferably concentric, hole which serves for receiving the elongated body.

11. Measuring insert (ME) according to one of the preceding claims,
wherein the end-plate (EP) is snapped on the elongated body (C).

12. Measuring insert (ME) according to one of the preceding claims,
wherein said elongated body (C) is a mineral isolated sheath.

13. Measuring insert (ME) according to one of the preceding claims,
wherein at least one spring-element (S1, S2) having a spring-travel distance is provided which serves to connect the insert (ME) to said protective sheath (S) and/or said housing (G).

14. Measuring arrangement (MA) comprising a measuring insert (ME) according to one of the preceding claims and a protective sheath (S) and preferably a housing (G).

15. Measuring arrangement (MA) according to the preceding claim,
wherein the tip of the measuring insert (ME) is in touch with the closed end of the protective sheath (S).
